(19) **Europäisches Patentamt / European Patent Office / Office européen des brevets**

(11) **EP 1 912 369 A1**

(12) **EUROPEAN PATENT APPLICATION**

(43) Date of publication:
16.04.2008 Bulletin 2008/16

(51) Int Cl.:
*H04L 1/06* (2006.01)        *H04L 25/02* (2006.01)

(21) Application number: 06301041.7

(22) Date of filing: 11.10.2006

| | |
|---|---|
| (84) Designated Contracting States:<br>AT BE BG CH CY CZ DE DK EE ES FI FR GB GR HU IE IS IT LI LT LU LV MC NL PL PT RO SE SI SK TR<br>Designated Extension States:<br>AL BA HR MK RS<br><br>(71) Applicant: Thomson Licensing<br>92100 Boulogne-Billancourt (FR) | (72) Inventor: Gueguen, Arnaud<br>92648 Boulogne Cedex (FR)<br><br>(74) Representative: Le Dantec, Claude<br>46, Quai Alphonse Le Gallo<br>92100 Boulogne-Billancourt (FR) |

(54) **Method of decoding of a received multidimensional signal and corresponding device**

(57) The inventions relates to a decoding of a multidimensional received signal corresponding to a discrete multidimensional coded signal transmitted through a channel. For reduction of complexity, it comprises the following steps:
- preprocessing (54) applied to a subset of bins within a set of time/frequency bins to build channel equivalent matrices restricted to the subset;
- interpolation (58) for remaining time/frequency bins with respect to the channel equivalent matrices restricted to the subset to build channel equivalent matrices associated with the remaining time/frequency bins ; and
- decoding (55) of an observation with a lattice decoding by using the channel equivalent matrices associated to the set of time/frequency bins.

Fig 5

**Description**

**1. Field of the invention.**

The present invention relates to the field of digital communication. More specifically, it deals with an efficient way to implement a decoding based on a lattice (lattice decoding corresponds to a decoding of a distorted discrete multidimensional signal), that is used, for example, in a decoding of a signal transmitted through a noisy channel or multi-user detection.

**2. Technological background.**

Optimal decoding of digital signals that have been distorted by linear filtering (e.g. a wireless channel) and corrupted by noise is a key and recurrent issue in digital communications. An optimal decoder is the one that finds the candidate digital signal that is the most likely, given the received observed signal. Such optimal decoder is said to be optimal in the sense of Maximum Likelihood (or ML).

A basic approach to perform ML decoding consists in exhaustively enumerating all possible transmitted digital signals and selecting the most likely candidate. The selection criterion often consists in computing a Euclidean distance between the filtered candidate and the received observation. However, such exhaustive enumeration is very time consuming and most of the time impractical for real time applications. Indeed the number of candidates, and hence the decoder complexity, is exponential with respect to the length of the digital signal. For instance a signal carrying 10 bits may take 1024 (or $2^{10}$) different values and all these values need being enumerated in basic ML decoding.

More appropriate ML decoding algorithms have emerged based on a multidimensional lattice description of the problem, which will be referred to as lattice decoders in the sequel. For instance a signal made of 8 consecutive 16QAM symbols can be described by a 8 dimension lattice with 16 discrete possible values per dimension. After linear filtering, the lattice will remain a lattice but it will be distorted. Instead of enumerating all possible lattice points ($16^8$ in the present case), lattice decoders will restrict to evaluating lattice points that are in the vicinity of the received signal.

The main drawback of the state of the art is that lattice decoders are still complex (especially for real time applications) even if they have polynomial decoding complexity (instead of exponential for basic ML).

Simplifications of lattice decoders for applications of MIMO (or Multiple Input Multiple Output) transmissions, have been suggested in the following documents:

- "VLSI implementation of MIMO detection using the sphere decoding algorithm" written by Burg & Al (and published in Solid-State Circuits, IEEE Journal of Volume 40, Issue 7, July 2005 Pages 1566-1577); and
- "On maximum-likelihood detection and the search for the closest lattice point" written by Damen & Al (and published in Information Theory, IEEE Transactions on Volume 49, Issue 10, Oct. 2003 Pages:238 -2402).

Indeed, the technique presented in these documents still remains complex.

**3. Invention summary.**

The invention is aimed at alleviating these drawbacks of the prior art.

More particularly, the objective of the invention is to simplify the implementation of a decoding method based on a lattice, while keeping good performances.

For this purpose, the invention proposes a method of decoding of a multidimensional received signal corresponding to a discrete multidimensional coded signal transmitted through a channel, so-called transmitted signal. In order to simplify the implementation, the method comprises the following steps:

- preprocessing applied to a subset of bins within a set of time/frequency bins to build channel equivalent matrices restricted to the subset;
- interpolation for remaining time/frequency bins with respect to the channel equivalent matrices restricted to the subset to build channel equivalent matrices associated with the remaining time/frequency bins ; and
- decoding of an observation with a lattice decoding by using the channel equivalent matrices associated to the set of time/frequency bins.

According to the invention, a time/frequency bin corresponds to a generic definition of a symbol time duration (time bin) and frequency subcarrier. This can be applied to mono carrier (time bin) or multicarrier modulation (time/frequency).

In addition, channel equivalent matrices associated to the set of time/frequency bins comprise channel equivalent matrices restricted to the subset and channel equivalent matrices associated with the remaining time/frequency bins

According to a specific feature, preprocessing step comprises the building of matrices ($\mathbf{Q}$, $\mathbf{R}$, $\mathbf{G'^tG'}$, $\mathbf{U}$, $\mathbf{U}^{-1}$) derived from channel equivalent matrices restricted to the subset;

in that the interpolation step comprises the building of matrices derived from channel equivalent matrices associated with the remaining time/frequency bins; and

in that decoding step is using the channel equivalent matrices and derived matrices associated to the set of time/frequency bins.

Advantageously, the interpolation step is comprising a linear interpolation.

According to another feature, the interpolation step applied to a given time/frequency bin is comprising an interpolation based on adjacent bins belonging to the subset and located in the neighborhood of the given time/frequency bin.

According to an advantageous feature, the interpolation step applied to a given time/frequency bin is based on bins belonging to the subset and associated with the same frequency as the frequency of the given time/frequency bin.

In this case, all frequencies are represented in the corresponding subset.

Advantageously, time/frequency of the subset are regularly located in the subset.

According to a specific feature, the method comprises a step of check of variation of values depending on at least a part of the result of the preprocessing step, and if a variation along time dimension and/or frequency dimension is small according to a variation criterion, then a preprocessing step is also applied to at least a part of remaining time/ frequency bin.

According to a particular feature, the discrete multidimensional coded signal comprises data representative of a digital video broadcast signal.

The invention also concerns a device comprising a decoder of a multidimensional received signal corresponding to a discrete multidimensional coded signal transmitted through a channel, so-called transmitted signal, characterized in that it comprises the following means:

- means of preprocessing applied to a subset of bins within a set of time/frequency bins to build channel equivalent matrices restricted to the subset;
- means of interpolation for remaining time/frequency bins with respect to the channel equivalent matrices restricted to the subset to build channel equivalent matrices associated with the remaining time/frequency bins ; and
- means of decoding of an observation with a lattice decoding by using the channel equivalent matrices associated to the set of time/frequency bins, that comprise channel equivalent matrices restricted to the subset and channel equivalent matrices associated with the remaining time/frequency bins.

This device is for example a receiver, a corresponding chip, a terminal (such as a mobile device, a telecommunication device).

## 4. <u>Brief description of the drawings.</u>

The invention will be better understood, and other features and advantages will become apparent from reading the description that follows, the description referring to the appended drawings in which:

- Figure 1 represents a wireless network;
- Figure 2 represents an exemplary architecture of a data transmitter capable of sending data in a way compliant with the invention;
- Figure 3 represents an exemplary architecture of a data receiver according to a specific embodiment of the invention;
- Figure 4 represents an exemplary architecture of a decoder inside the receiver of figure 3;
- Figures 5 and 14 represent a decoding method implemented in the receiver of figure 3 according to the invention;
- Figure 7 is a schematic view in a case the dimension of the decoding method of Figure 5 is two;
- Figure 8 represents the distribution of the norm of the noise vector affecting the signal received by the receiver of figure 3;

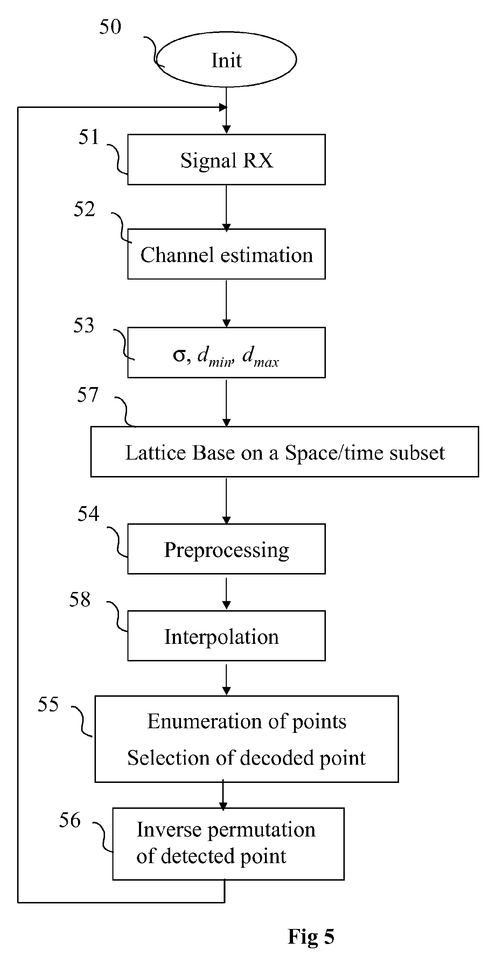

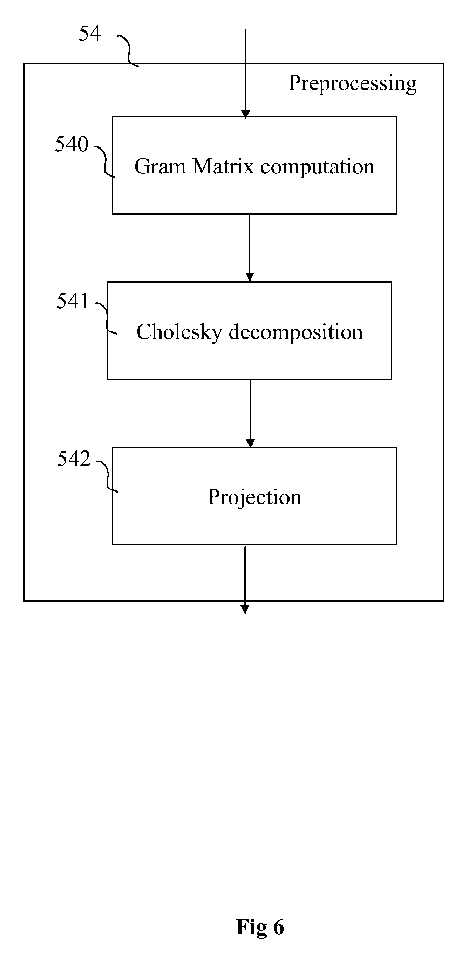

- Figures 6, 9 and 10 represent detailed step of the decoding method of Figure 5;

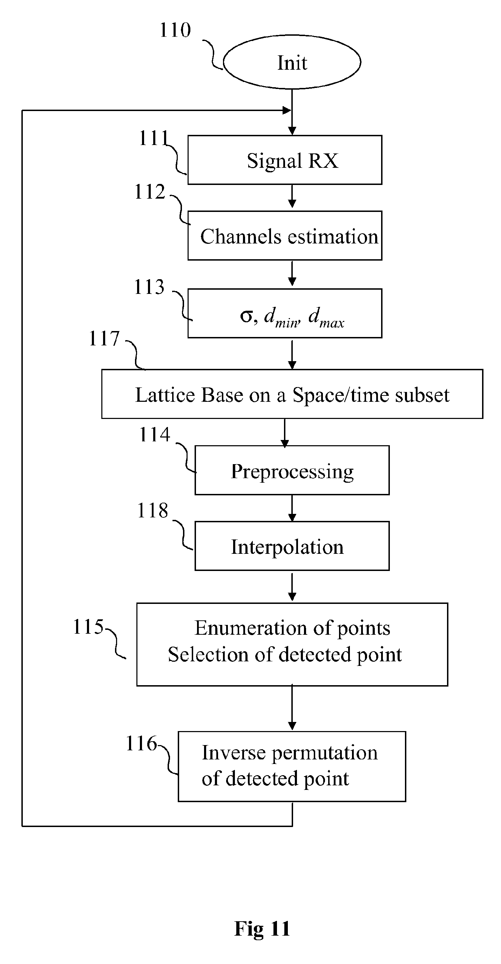

- Figure 11 represents a multi-user detection according to a specific embodiment of the invention; and

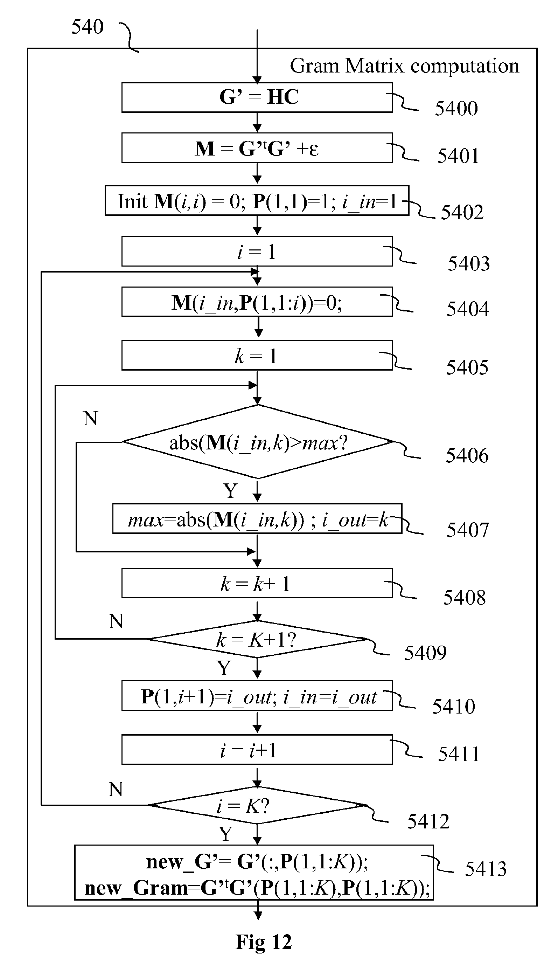

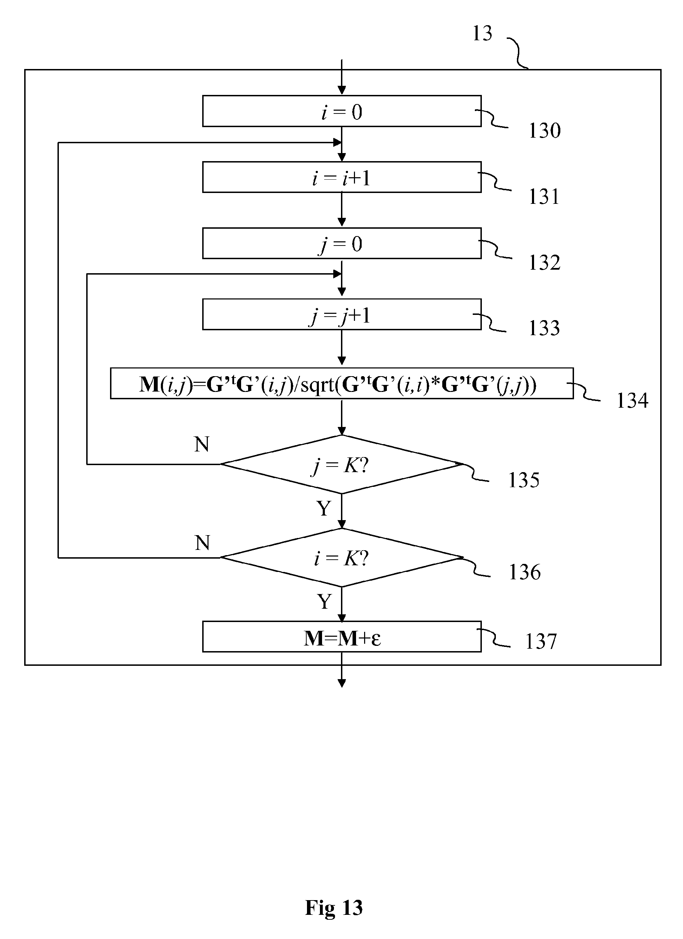

- Figures 12 and 13 present matrix reordering step in the decoding method of figure 5.

## 5. Detailed description of the invention.

Lattice decoders comprise generally two main phases: a preprocessing phase and a search phase. According to state of the art, the preprocessing phase is performed each time the lattice basis changes (this basis is, for example, related to the wireless channel realization). However thanks to the time and/or frequency coherence of the channel, the lattices corresponding to adjacent time and/or frequency bins are very similar. According to the invention, the preprocessing phase is performed on a subset of time and/or frequency bins and the results of the preprocessing for the remaining bins are interpolated. Although the preprocessing operations are non linear, they can indeed be approximated as locally linear with no or very little impact on the performance. This property is exploited by the invention. Interpolating instead of explicit preprocessing brings a significant complexity reduction in practical cases, which is important to implement high throughput schemes.

The invention is applicable to any lattice decoding algorithm and provides good results when lattice bases are sufficiently similar so that the interpolation can be used. It is applicable to any lattice decoding problem (e.g. decoding of Space-Time Block encoded signals and/or multi-user detection). The invention can be applied to all systems that are based on lattice decoding, especially to decoding of Space-Time Block encoded signals, to decoding of data transmitted through a MIMO channel or to multi-user detection.

When applied to ML decoding of STBC encoded MIMO transmissions, this allows reducing the lattice decoding complexity. As a consequence, this enables implementing high throughput high reliability wireless MIMO transmissions with reasonable receiver complexity.

The interpolation is advantageously associated with other features. According to a first variant, vectors of a matrix (equivalent channel matrix or Gram matrix) are sorted according to a decreasing colinearity criterion, a permutation being applied to vectors of this matrix to obtain a reordered matrix. Then, the decoding of an observation with a lattice decoding is using matrix derived from the reordered matrix to get estimation of a permutated transmitted signal or the reordered matrix itself and inverse permutation is applied to the estimation of the permutated transmitted signal to get an estimation of the transmitted signal. This feature enable to reduce the complexity of lattice based decoders. In particular, it has been observed through simulations that some types of wireless channels strongly distort the lattice representing the transmitted signal, which induces a larger decoding complexity of lattice decoders (e.g. when the lattice basis is ill conditioned). This is the case for strongly spatially correlated channels and/or channels presenting a strong LOS (Line Of Sight) component. The invention brings a significant complexity reduction for this type of wireless channels, which has been observed as being a critical channel type that conditions the lattice decoder complexity and dimension the receiver design.

According to a second variant that can be combined with the first variant and that furthermore reduce the complexity of the receiver, the decoding of a multidimensional received signal comprises:

- determination of a minimum distance according to a noise level associated to the multidimensional received signal;
- for at least a part of candidate discrete multidimensional signals, selection of a subset according to the minimum distance with respect to the received multidimensional received signal; and
- determination of a decoded point in the subset.

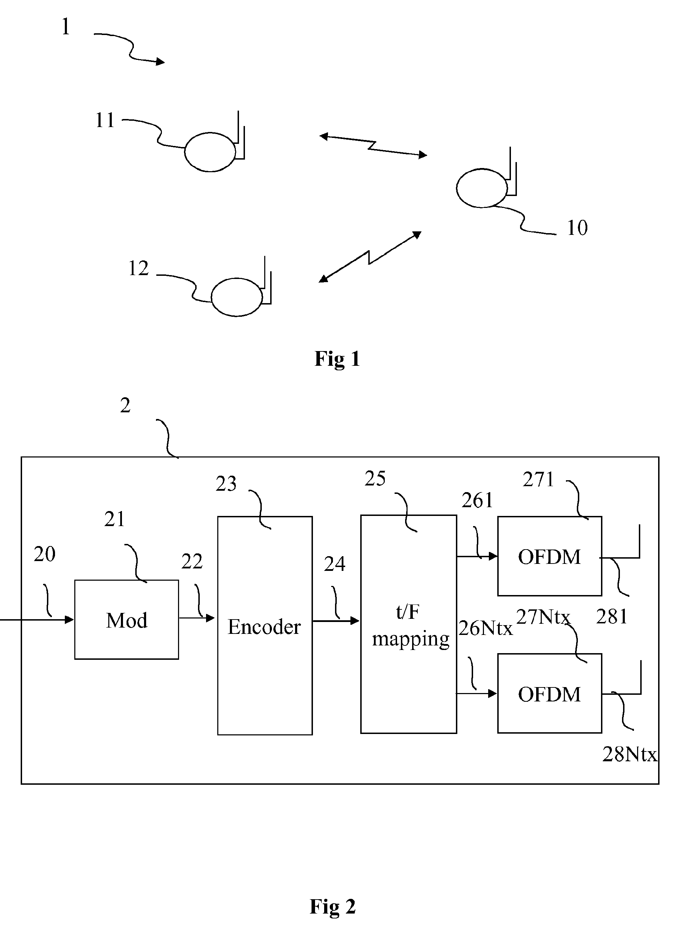

**Figure 1** represents a wireless network 1 comprising several stations 10 to 12. Each station 10 to 12 comprises a transmitter and a receiver using a MIMO (or Multiple Input Multiple Output) antenna system. Station 10 communicates with stations 11 and 12 through a wireless link.

**Figure 2** represents an exemplary architecture of a data transmitter 2 capable of sending data in a way compliant with the invention applied to decoding of a signal transmitted through a MIMO noisy channel. The data transmitter 2 can be implemented in stations 10 to 12.

The transmitter 2 comprises:

- a modulator 21;
- an encoder 23;
- a time/frequency mapper 25;
- $Ntx$ OFDM modulators 271 to 27$Ntx$ each modulating with an OFDM modulator an input signal 261 to 26$Ntx$; and
- $Ntx$ antennas 281 to 28$Ntx$, each being associated to an OFDM modulator respectively 271 to 27$Ntx$.

The transmitter 2 receives a binary signal 22 which is digitally modulated by the modulator 21 with a first modulation which is, for instance a QAM modulation (or "Quadrature Amplitude Modulation") (e.g. 16 QAM or 64QAM). The modulator 21 generates groups of $Q$ complex QAM symbols $S1$ to $SQ$. $Q$ is for example equal to 8.

Each group of $Q$ symbols 22 is then encoded with the encoder 23 to form a STBC (or Space Time Block Code) codeword 24. The STBC is, for instance, a Golden code such as disclosed in document "The Golden Code: A 2 x 2 Full-Rate Space-Time Code with Non-Vanishing Determinants," which has been written by J.-C. Belfiore, G. Rekaya, E. Viterbo (and published in IEEE Transactions on Information Theory, vol. 51, n. 4, pp. 1432-1436, Apr. 2005.). According to a variant, the STBC is as disclosed in "Space-Time block codes from orthogonal designs" document written by V.Tarokh, H. Jafarkhani, and R. A. Calderbank (and published in IEEE Transactions on Information Theory, vol. 45, pp.

1456-1467, July 1999). The STBC is based on a complex matrix of dimension $N_{tx}*N$ where $N$ is the time dimension of the STBC.

The generated STBC 24 is mapped in the time/frequency mapper that transmits a dedicated signal 261 to 26Ntx to each of OFDM modulator 271 to 27Ntx. Then, each modulator 271 to 27Ntx modulates its input signal into an OFDM modulated signal that is sent on an antenna respectively 281 to 28Ntx (after possibly filtering, frequency transposition and amplification as usually done in a radio transmitted signal). As summary, the STBC codeword 24 is then sent on a MIMO channel.

Such a transmitter system is disclosed in "Space-frequency coded broadband OFDM systems", written by H. Bölcskei and A. J. Paulraj (and published in Proc. Wireless Commun. Networking Conf., Chicago, IL, Sept. 23-28, 2000, pp. 1-6).

There are many possible variants of the transmitter that are compliant with the invention. Among them, a single carrier modulation can replace the OFDM modulation (or any multi carrier modulation such IOTA (for "Isotropic Orthogonal Transform Algorithm")). Then, a time/frequency mapper 25 and the OFDM modulators 271 to 27Ntx are replaced by at least two single carrier modulators associated each with a antenna. Such a transmitter system is disclosed in "Space-Time block coding: A simple transmitter diversity technique for wireless communications" written by S. Alamouti (and published in IEEE Journal On Select Areas In Communications, vol. 16, pp. 1451-1458, October 1998).

According to other variants (that are compliant with previous ones), the first modulation can be of any digital modulation, e.g. nPSK (for "Phase Shift Keying with n phase values) or nQAM (eg with n equals to 16, 32, 64, 256...).

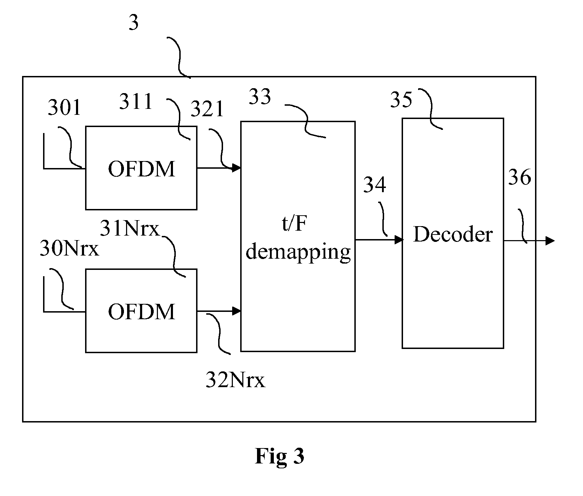

**Figure 3** represents an exemplary architecture of a data receiver 3 according to a specific embodiment of the invention. The receiver 3 receives a signal send by the transmitter 2 through a wireless channel. This channel is noisy and comprise Additive White Gaussian Noise (or AWGN) and possibly other noise such as interferences. The sent signal can also be affected by multipath echos and/or Doppler effect. The data receiver 3 can be implemented in stations 10 to 12.

The receiver 3 comprises:

- *Nrx* antennas 301 to 30Nrx;
- *Nrx* OFDM demodulators 311 to 31*Nrx* each demodulating a noisy OFDM modulated signal transmitted by an antenna respectively 301 to 30*Nrx;*
- a time/frequency demapper 33; and
- a decoder 35.

The receiver 3 matches the transmitter 2 (especially for modulation and code used by the transmitter). Then, according to variants using single carrier modulation inside the transmitter, the OFDM demodulators are replaced by the corresponding single carrier demodulators.

The receiver 3 comprises *Nrx* receive antennas 301 to 30*Nrx* so that the received signal 301 to 30*Nrx* can be represented by a *Nrx*N* matrix, or equivalently a (*Nrx*N)*1* vector **R.** *N* is, for instance, equal to 2 and represents the time and/or frequency range occupied by the STBC.

The transmission between the encoder 23 and decoder 35 can be modeled by the following equation:

$$\mathbf{R} = \underbrace{\begin{pmatrix} \mathbf{H}_1 & \mathbf{0} & \cdots & \mathbf{0} \\ \mathbf{0} & \mathbf{H}_2 & \ddots & \vdots \\ \vdots & \ddots & \ddots & \mathbf{0} \\ \mathbf{0} & \cdots & \mathbf{0} & \mathbf{H}_N \end{pmatrix}}_{\mathbf{G}} \mathbf{CS} + \mathbf{v} = \mathbf{GS} + \mathbf{v} \qquad \text{(relation 1)}$$

Where the different parameters are as follows:

- **R** is the complex (*Nrx*N)*1* received vector;
- **$H_i$** is the complex *Nrx*Ntx* channel matrix at time/frequency interval *i* (frequency corresponds to a carrier of the multicarrier modulation; according to a variant using a single carrier modulation the interval *i* corresponds to a time interval);
- **H**=diag(**H**$_1$,..., **H**$_N$) is the complex block diagonal (*N*Nrx)*(N*Ntx)* channel matrix at time/frequency intervals 1 to N;
- **C** is the complex (*Ntx*N)*Q* STBC coding matrix, where *Q* is the number of input complex symbols per STBC codeword;
- **S** is the complex *Q*1* input vector of discrete modulated symbols;

- ν is the complex $(N*Nrx)*1$ Additive White Gaussian Noise (or AWGN) vector with autocorrelation matrix $\mathbf{R}_\nu =\sigma^2 \mathbf{I}NNrx,$ where $\mathbf{I}NNrx$ is the identity matrix of size $(N*Nrx)*(N*Nrx)$ and $\sigma^2$ represents the variance of the AWGN.

According to a variant, the space/time coding process takes place with real inputs (instead of complex inputs). Then, the **C** matrix is a real matrix with a dimension $(2Ntx*N)*(2Q)$.

When the additive noise and interferences corrupting the received signal is not white, a whitening filter is advantageously implemented before the decoder 35. $\sigma^2$ represents the variance of the resulting whitened noise.

The time/frequency demapper 33 received demodulated signal from OFDM demodulators 311 to 31$Nrx$ and is doing the reverse mapping (corresponding to dual operation of mapper 25). It provides a demapped signal to decoder 35.

The decoder 35 is a lattice decoder and is particularly well suited to perform ML decoding of the Space-Time Block encoded signal.

According to a variant of the invention, the decoder 35 is exploiting the properties of the noise distribution by selecting points in a lattice that are between two spheres around a received point, the decoded point being chosen among selected points. This enables a reduction of the decoder complexity as the number of selected points can be lowered in comparison with a state of art decoder where the selected points are within one sphere around the received point. Actually, it is unlikely that ML decoding would choose points of the lattice that are too close to the received point as decoded points. Then, the decoder does not select these points as potential candidates for decoded points. Reduction of number of selected points enables a dramatic reduction of decoding complexity (the decoding complexity depend of the level of noise and is increasing with the number of selected points).

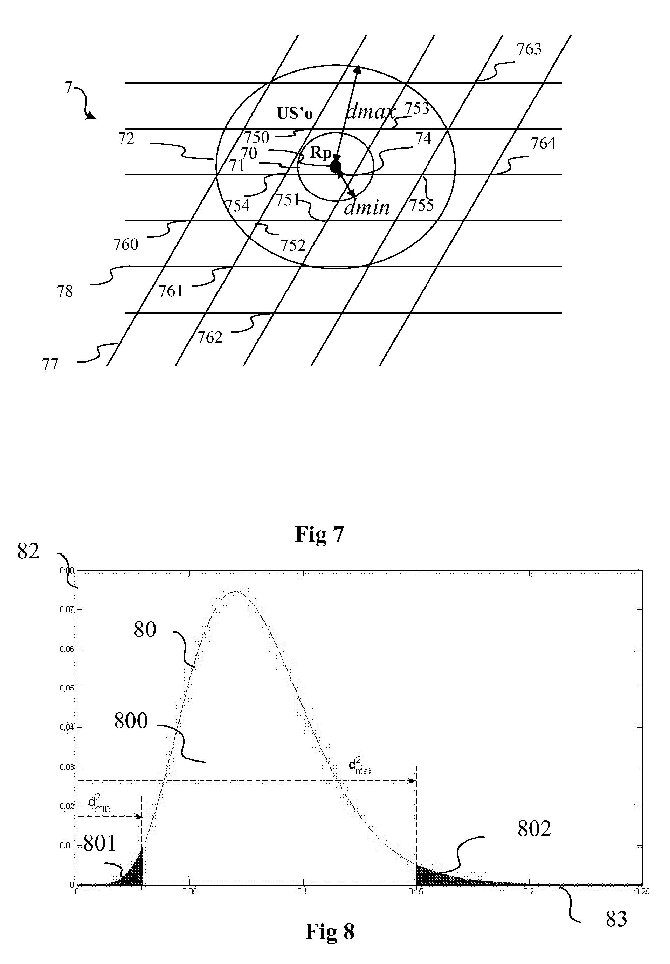

This aspect is illustrated on **figure 7**, which represents the distribution of received data received by the receiver 3. Figure 7 gives a simplified lattice representation 7 of the decoding problem. The problem is illustrated in the case where the dimension $K$ is 2 ($Q$ equals 1) for the sake of illustration clarity. Those two dimensions are represented respectively by lines 77 and lines 78. Intersections of lines 77 and 78 corresponds to points of the lattice 7.

The transmitted signal (which is the ML point here), is a lattice point 750 represented by **US'$_0$**. The received signal 70 is represented by $\mathbf{R}_p=\mathbf{US'}_0+\eta$ ($\eta$ being the noise vector) and is not a lattice point. The lattice points that can be considered as candidates for ML decoding are, according to a variant of the invention, in a search space between two spheres 71 and 72:

- the sphere 71 S($\mathbf{R}_p$,*dmin*) of radius *dmin* (which has a non null value) and centered on $\mathbf{R}_p$;
- the sphere 72 S($\mathbf{R}_p$,*dmax*) of radius *dmax* (which is greater than *dmin*) and centered on $\mathbf{R}_p$.

Then, as illustrative example, a lattice point 74 is within the sphere 71 and is not among candidate points for the ML decoding according to a variant of the invention (whereas according to other variants, this point would have been selected by decoding method). Lattice points 760 to 764 are outside the sphere 72 and are not among candidate points for the ML decoding. Lattice points 750 to 754 are in sphere 72 and outside sphere 71; then, these points are considered as candidates by the decoder.

**Figure 8** illustrates a distribution 80 of the norm of the noise vector $\eta$ for $\sigma^2$ equal to 0.01 (20dB SNR) and $K$ (or 2Q) equal to 16. This is a chi square distribution with $K$=16 degrees of freedom denoted $\chi_K^2$. The horizontal axis 83 represents the normalized distance to the received point. The vertical axis 82 corresponds to the distribution of samples for a given normalized distance.

The distances *dmin* and *dmax* are defined such that Pr($\|\eta\|$>*dmax*) equals $10^{-2}$ and Pr($\|\eta\|$ < *dmin*) equals $10^{-2}$. These probabilities are example values. It can be noted that area 801 corresponding to normalized distance lower than *dmin* and area 802 corresponding to normalized distance higher than *dmax* are very small (each having a normalized surface of $10^{-2}$) compared to the middle area 800, where the normalized distance is greater than *dmin* and lower than *dmax.* On the given example, *dmin* is around 0.025 that is significant. Then, it shows that it is very unlikely that the distance between a point corresponding to the coded point (without noise) and the actual received point is below *dmin.*

In the decoding process, *dmax* gives an initial value for the radius of the sphere S($\mathbf{R}_p$,*r*) within which the search will take place. By definition of *dmax,* the probability that the transmitted signal is outside this sphere is $10^{-2}$. Setting the initial radius to *dmax* therefore allows reducing the initial search space, and hence the decoding complexity, for a given level of performance.

According to a variant of the invention, *dmin* is introduced and can advantageously be used in the decoding process according to two ways, as follows:

- A way to use it is to interrupt the decoding as soon as a lattice point is found within *dmin* from the received signal. It is then very likely that this point is the transmitted point (with a probability of 99%);
- Another way to use it is to define a second sphere S($\mathbf{R}_p$,*dmin*) inside S($\mathbf{R}_p$,*dmax*), inside which it is useless searching for lattice points.

Any of these utilizations (or a combination of both) will reduce the decoding complexity while knowing the impact on the performance.

More generally, *dmin* is advantageously defined by the following equation

$$\frac{2}{\sigma^2 2^Q (Q-1)!} \int_0^{d_{min}^2} \left(\frac{2x}{\sigma^2}\right)^{Q-1} \exp\left(\frac{-x}{\sigma^2}\right) \mathrm{d}x = p_0 \qquad (4)$$

where the integrated function is the probability density function (or pdf) of $\|\eta\|^2$ and $p_0$ is the desired probability threshold of the event (i.e. the transmitted signal is in $S(\mathbf{R}_p, dmin)$). Then, $dmin/\sigma$ can be determined according to a predefined value of *po*. It can be computed on the fly ($dmin = \sigma.f(po)$ where $f(po)$ is fixed if *po* is predefined and can be computed off line during the design phase of the decoder) or determined according to a look-up table defining *dmin* according to σ. Advantageously, a single value of *po* is used. According to variants, several values of *po* are used in the decoder. Then, several values of f(*po*) are defined accordingly.

As variant, if a large number of *po* value are required for the decoding, *dmin* can be determined by using approximations of above equation (e.g. by using a first or second orders of a Taylor series).

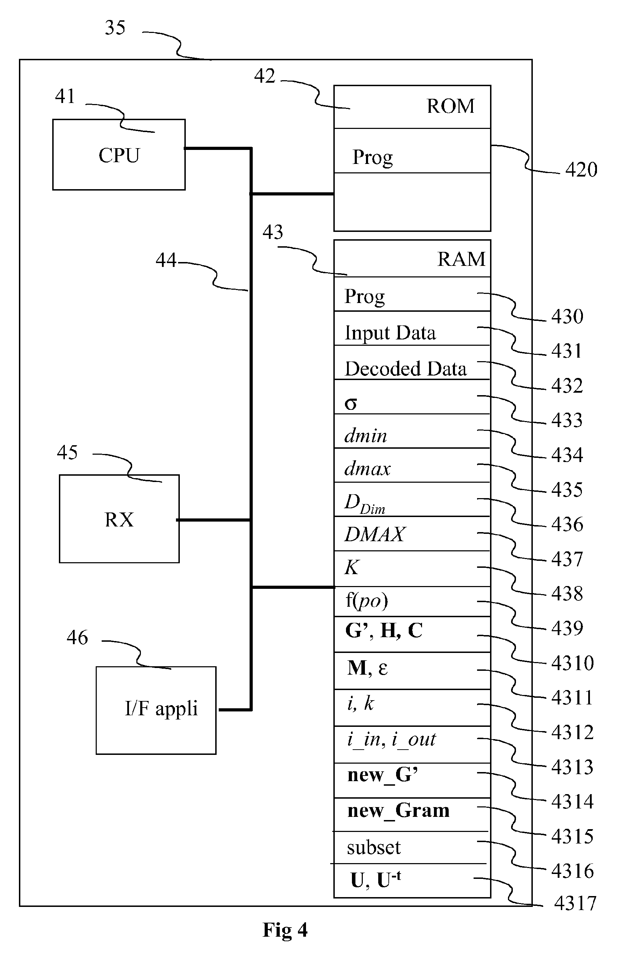

**Figure 4** represents an exemplary architecture of the decoder 35 of the receiver 3.

Decoder 35 comprises following elements that are linked together by a data and address bus 44:

- a microprocessor 41 (or CPU), which is, for example, a DSP (or Digital Signal Processor);
- a ROM (or Read Only Memory) 42;
- a RAM (or Random Access Memory) 43;
- an interface 45 for reception of input signal coming from the demapper 33;
- an interface 46 for transmission of decoded data to an application.

Each of these elements of figure 2 are well known by those skilled in the art and won't be disclosed further.

In each of mentioned memory, the word « register » used in the specification can correspond to area of small capacity (some bits) or to very large area (e.g. a whole program or large amount of received or decoded data).

ROM 42 comprises a program 420.

Algorithm of the method according to the invention are stored in the ROM 42. When switched on, the CPU 41 uploads the program 420 in the RAM and executes the corresponding instructions.

RAM 43 comprises:

- in a register 430, the program executed by the CPU 41 and uploaded after switch on of the decoder 35;
- input data in a register 431;
- decoded data in a register 432;
- a value of σ (standard deviation of noise) in a register 433;
- values of *dmin* and *dmax* in registers respectively 434 and 435;
- parameter *D* in a register 436;
- parameter *DMAX* in a register 437;
- parameter *K* in a register 438;
- f(*po*) enabling the computation of *dmin* according to σ in a register 439;
- matrices **G'** (equivalent channel matrix), **H** (channel matrix), **C** (code matrix) in a register 4310;
- Gram matrix **M** and small value matrix ε in a register 4311;
- variables *i* and *k* in a register 4312;
- *i_in* and *i_out* indices in a register 4313;
- new equivalent channel matrix **new_G'** in a register 4314;
- new Gram matrix **new_Gram** in a register 4315;
- a subset of time intervals and/or subcarriers in a register 4316; and
- matrices **U, U$^{-t}$** that correspond to the results of preprocessing applied to the subset in a register 4317.

According to a variant of the invention, the decoder 35 is implemented in pure hardware configuration (e.g. in one or several FPGA, ASIC or VLSI with corresponding memory) or in a configuration using both VLSI and DSP.

**Figure 5** represents a decoding method implemented in the decoder 35.

The decoding begins with a initialization step 50, wherein different parameters of the method are set to their initial value(s).

Then, during a step 51, the decoder 35 waits for and receives a signal from demapper 33.

Then, the CPU 41 makes a channel estimation 52 based upon the received signal (associated to one transmitted block) or part of it. According to a variant of the invention, the estimation 52 is based upon several received signals (or part of them), each being associated to a transmitted block. According to another variant of the invention, the estimation 52 is not done at each reception of signal corresponding to one transmitted block; in this case, it may be done when necessary according to the channel changes (e.g. every 1 ms).

Then, in a step 53, CPU 41 computes $\sigma$ using, for example, a pilot sequence and determines *dmin* as explained above and possibly *dmax* in a similar way. Advantageously, step 53 is executed after each channel estimation 52. According to a variant of the invention, step 53 is not done at each reception of signal corresponding to one transmitted block.

During a step 57, a subset of time/frequency bins is determined. The subset comprises bins that correspond to one out of two time dimensions and one out of two frequency dimension.

According to a variant, the subset comprises bins that correspond to one out of two time dimensions and to all frequency dimensions (as the transmission channel in varying less in time dimensions than in frequency dimensions).

Indeed, any other subset of points comprising 1 out of $p$ ($p$ being equal, for example, to 2, 3, 4... 10, 11, ..or any rational value (e.g. 2.5, 3/4, 2/3,...)) in time dimensions and/or in frequency dimensions can be chosen according to the invention. The points of subset are advantageously regularly located in time dimensions and/or frequency dimensions. Indeed, according to variants, the points of the subset may be more numerous in some time and/or frequency intervals (for example, if the transmission channel varies more in the corresponding intervals).

Then, CPU 41 is executing a preprocessing step 54 on subset of time/frequency bins determined in step 57.

Then, during step 58, for each bin that does not belong to the subset, an interpolation is performed using the result step 54 for bins of subset, surrounding the considered bins. For example, if the subset comprises bins that correspond to one out of two time dimensions (eg. $t0$, $t2$, $t4$,.... $tu$) and one out of two frequency dimensions (eg. $f0$, $f2$, $f4$,.... $fv$), these bins on which preprocessing 54 has been performed, are regularly located. Any other bin on which interpolation is performed, corresponds to intermediate time or frequency (typically $ti$ between $ti-1$ and $ti+1$ and $fj$ between $fj-1$ and $fj$). Then, a new lattice basis **U** and associated matrices $\mathbf{U}^{-t}\mathbf{G}'^{t}$ used in the lattice decoding 55 for bin $tifj$ (that is detailed hereafter) are obtained by the following interpolation:

$$\mathbf{U}ti,fj = \tfrac{1}{4}(\mathbf{U}ti-1,fj-1 + \mathbf{U}ti-1,fj+1 + \mathbf{U}ti+1,fj-1 + \mathbf{U}ti+1,fj+1).$$

$$\mathbf{U}^{-t}\mathbf{G}'^{t}ti,fj = \tfrac{1}{4}(\mathbf{U}^{-t}\mathbf{G}'^{t}ti-1,fj-1 + \mathbf{U}^{-t}\mathbf{G}'^{t}ti-1,fj+1 + \mathbf{U}^{-t}\mathbf{G}'^{t}ti+1,fj-1 + \mathbf{U}^{-t}\mathbf{G}'^{t}ti+1,fj+1).$$

According to a variant using QR decomposition instead of Cholesky, the preprocessing produces matrices **U** and **Q**. So that the interpolation is performed to obtain such matrices, and Q can be expressed as:

$$\mathbf{Q}ti,fj = \tfrac{1}{4}(\mathbf{Q}ti-1,fj-1 + \mathbf{Q}ti-1,fj+1 + \mathbf{Q}ti+1,fj-1 + \mathbf{Q}ti+1,fj+1).$$

In the following description, only detailed formula on **U** are given for ease of reading. Of course, similar formulas are determined for $\mathbf{U}^{-t}\mathbf{G}'^{t}$ (or **Q** for the variant).

According to another example, if the subset comprises points that correspond to one out of two time dimensions (eg. $t0$, $t2$, $t4$,.... $tu$) and all frequency dimensions (eg. $f0$, $f1$, $f2$, .... $fv$), these points being regularly located in time dimension, any point corresponding to intermediate time (typically $ti$ between $ti-1$ and $ti+1$). Then, the new lattice basis **U** (that is detailed hereafter) can be expressed as:

$$\mathbf{U}ti,fj = 1/2(\mathbf{U}ti-1,fj + \mathbf{U}ti+1,fj).$$

As a variant any linear interpolation can be used to determine a new lattice basis **U** for bin $tifj$. Advantageously,

a higher weight is applied to bins close to the considered bin. Advantageously, the interpolation is based only on adjacent bins.

As exemplary variant, if the subset comprises bins that correspond to one out of 10 time dimensions (eg. *t*0, *t*10, *t*20,.... *t*10*u*) and all frequency dimensions (eg. *f*0, *f*1, *f*2,.... *f*v), these bins on which preprocessing 54 has been performed, are regularly located. Any other bin on which interpolation is performed, corresponds to intermediate time (typically *t*10i+k between *t*10i and *t*10(i+1) for any subcarrier *j*). Then, a new lattice basis **U** for bin *t*10i+k*f*j is obtained by the following interpolation:

$$\mathbf{U}t10i+k,fj = 1/10((10-k)\mathbf{U}t10i,fj + k\mathbf{U}t10(i+1),fj).$$

Then, CPU 41 is enumerating lattice points and selects decoded point in a step 55.

Then, during a step 56, the components of the decoded point are inversely permutated according to the permutation produced by step 540. After step 56, step 51 is reiterated.

According to a variant of the invention, step 540 does not comprise any permutation. Then, step 51 is reiterated after step 55.

In a variant using DSP and VLSI, advantageously, step 54 is performed by the DSP and step 55 by a VLSI (e.g. ASIC or FPGA).

The preprocessing step 54 changes the observation **R**' so that the lattice basis of the system can be expressed with a triangular matrix. In equation (2), the lattice basis is **G**': when **S** is modulated using e.g. a QAM modulation, each of the components of **S**' are PAM modulated, i.e. they take bounded discrete values. Therefore **G**' is in this case a basis of the $K=2Q$ dimensions lattice representing the problem.

$$\underbrace{\begin{pmatrix} \mathbf{R}^R \\ \mathbf{R}^I \end{pmatrix}}_{\mathbf{R}'} = \underbrace{\begin{pmatrix} \mathbf{H}^R & -\mathbf{H}^I \\ \mathbf{H}^I & \mathbf{H}^R \end{pmatrix}\mathbf{C}'}_{\mathbf{G}'} \underbrace{\begin{pmatrix} \mathbf{S}^R \\ \mathbf{S}^I \end{pmatrix}}_{\mathbf{S}'} + \underbrace{\begin{pmatrix} \mathbf{v}^R \\ \mathbf{v}^I \end{pmatrix}}_{\mathbf{v}'} \qquad (2)$$

To transform the basis matrix into a triangular matrix, we apply $\mathbf{U}^{-t}\mathbf{G}'^t$ to the received signal **R**' yielding a new observation $\mathbf{R}_p$, where **U** is an upper triangular $K$x$K$ matrix coming from the Cholesky decomposition of $\mathbf{G}'^t\mathbf{G}'$ :

$$\mathbf{R}_p = \mathbf{U}^{-t}\mathbf{G}''^t\mathbf{R}' = \mathbf{U}\mathbf{S}' + \mathbf{\eta}$$

In a variant, to transform the basis matrix into a triangular matrix, we apply $\mathbf{Q}^t$ to the received signal **R**' yielding a new observation $\mathbf{R}_p$, where **Q** is an orthogonal $K$x$K$ matrix coming from the QR decomposition of **G**'.

$\mathbf{R}_p$ is the new $K$*1 observation vector and $\eta$ is the $K$*1 noise vector with autocorrelation $\mathbf{R}_\eta = \dfrac{\sigma^2}{2}\mathbf{I}_K$ . U is the new lattice basis that is used by lattice decoding algorithms.

To summarize, the preprocessing phase mainly produces the matrices **U** and $\mathbf{U}^{-t}$ from the original matrix **G**' (or **U** and **Q** according to a variant):

Coming back to two STBC codewords transmitted on time-frequency bins $(t_1,f_1)$ and $(t_2,f_2)$, the preprocessing phase of the decoding of each codeword performs the following operations:

$$\mathbf{G}'(t_1,f_1) \xrightarrow{\text{preprocessing}} \mathbf{U}(t_1,f_1), \mathbf{U}^{-t}\mathbf{G}'(t_1,f_1)$$

$$\mathbf{G}'(t_2,f_2) \xrightarrow{\text{preprocessing}} \mathbf{U}(t_2,f_2), \mathbf{U}^{-t}\mathbf{G}'(t_2,f_2)$$

Two STBC codewords are affected by different channel realizations. However in practice, when the time-frequency bins defined by the sets $(t_1,f_1)$ and $(t_2,f_2)$ are sufficiently close from each other compared to the channel coherence time and/or bandwidth, the original matrices $\mathbf{G}'(t_1,f_1)$ and $\mathbf{G}'(t_2,f_2)$ are quite similar and as well the matrices $\mathbf{U}(t_1,f_1)$ and $\mathbf{U}(t_2,f_2)$ and the matrices $\mathbf{U}^{-t}\mathbf{G}'(t_1,f_1)$ and $\mathbf{U}^{-t}\mathbf{G}'(t_2,f_2)$ produced by the preprocessing.

According to the invention, this similarity is used. The matrices $\mathbf{U}(t_n,f_n)$ and $\mathbf{U}^{-t}\mathbf{G}'(t_n,f_n)$ are used to decode a STBC codeword allocated to intermediate time-frequency bins $(t_n,f_n)$ with respect to $(t_1,f_1)$ and $(t_2,f_2)$, instead of explicitly performing the preprocessing for these matrices. Although the preprocessing involves non linear operations, it turns out that the interpolation for small variations of the channel produces sufficiently accurate results while being much less complex that the explicit preprocessing. The interpolation may be linear or more complex interpolation may be performed. A linear interpolation corresponds to the first order of a Taylor series applied to $\mathbf{U}$ and $\mathbf{U}^{-t}\mathbf{G}'$. As variant of the invention, other orders (e.g. 2, 3, ...) of Taylor series applied to $\mathbf{U}$ and $\mathbf{U}^{-t}\mathbf{G}'$ can be used for more accurate non linear interpolation.

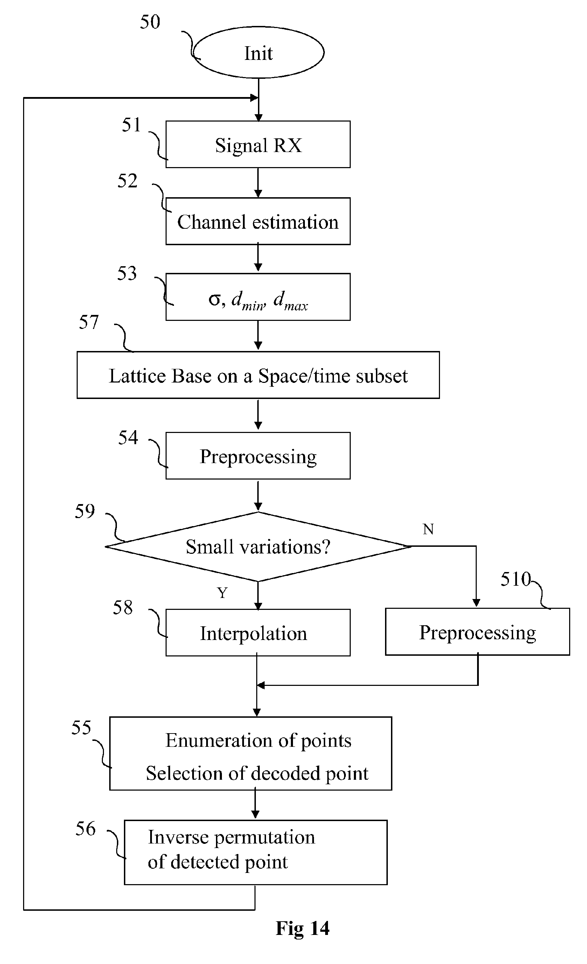

A variant of the decoding method implemented in the decoder 35 is disclosed in **figure 14** wherein a test is performed to check whether interpolation or preprocessing is appropriate.

The interpolation 58 may take place on a systematic basis, e.g. every two OFDM symbols (interpolation in time) and/or every two subcarriers (interpolation in frequency). However, non systematic interpolation may be more accurate, e.g. in the two following contexts:

- Depending on the environment, the channel may change very rapidly (high Doppler corresponding to high mobility) and/or be very frequency selective (high delay spread corresponding to large environment). In such case, interpolating on a regular time and/or frequency basis may be inaccurate because the approximation of small variations is no longer valid and therefore the approximation of local linearity of the operations involved in the preprocessing in also no longer valid.

- On the contrary, the channel may be very static (small Doppler corresponding to low mobility) and/or be flat in frequency (low delay spread corresponding to small environment and/or strong Line Of Sight component). In such case, interpolating on a regular basis, e.g. every two OFDM symbols or every two subcarriers, may be suboptimal as the channel stationnarity may be better exploited leading to better complexity reduction.

Therefore, in a particular embodiment of the invention as disclosed in figure 14, the interpolation may be conditioned on a variation criterion based on the similarity between the matrices $\mathbf{G}(t_1,f_1)$ and $\mathbf{G}(t_2,f_2)$ (or $\mathbf{U}(t_1,f_1)$ and $\mathbf{U}(t_2,f_2)$ or $\mathbf{U}^{-t}\mathbf{G}'(t_1,f_1)$ and $\mathbf{U}^{-t}\mathbf{G}'(t_2,f_2)$ (or $\mathbf{Q}(t_1,f_1)$ and $\mathbf{Q}(t_2,f_2)$ according to a variant based on QR decomposition)) between which the interpolation will take place. More explicitly, this criterion may be based on one of the following values:

$$ e_a = Tr\left(\Delta_a \Delta_a^t\right)/Tr\left(\mathbf{G}(t_1,f_1)\mathbf{G}^t(t_1,f_1)\right) \quad with \quad \Delta_a = \mathbf{G}(t_1,f_1)-\mathbf{G}(t_2,f_2) $$

$$ e_b = Tr\left(\Delta_b \Delta_b^t\right)/Tr\left(\mathbf{U}(t_1,f_1)\mathbf{U}^t(t_1,f_1)\right) \quad with \quad \Delta_b = \mathbf{U}(t_1,f_1)-\mathbf{U}(t_2,f_2) $$

$$ e_c = Tr\left(\Delta_c \Delta_c^t\right)/Tr\left(\mathbf{U}^{-t}\mathbf{G}'(t_1,f_1)\mathbf{U}^{-t}\mathbf{G}'(t_1,f_1)\right) \quad with \quad \Delta_c = \mathbf{U}^{-t}\mathbf{G}'(t_1,f_1)-\mathbf{U}^{-t}\mathbf{G}'(t_2,f_2) $$

and the interpolation takes place when one of this value (or a combination of them) is smaller than a predetermined threshold (e.g. normalized error ea, eb and ec below 0.01). Otherwise, explicit preprocessing shall be performed. The operator Tr($\mathbf{X}$) (Trace of $\mathbf{X}$) corresponds to the sum of values of the diagonal elements of $\mathbf{X}$.

According to a variant, the variation criterion is based on other values, e.g. on non normalized errors, on other norms such as the difference between a diagonal element of two explicitly computed matrices (e.g. $\mathbf{G}(t_1,f_1)$ and $\mathbf{G}(t_2,f_2)$).

Advantageously, the threshold is fixed. According to a variant, the threshold or the variation criterion can be changed with respect to, for example, the target level of performances or the STBC dimension.

Steps 50 to 54 and 57 are similar in figures 5 and 14 and won't be further detailed. According to the variant of figure 14, after step 54, a test 59 is checking if the variation according to the variation criterion is small enough along time dimension, frequency dimension or both according to the subset (if bins do not belong to a subset according to specific dimensions, then the test 59 considers this dimension or these dimensions).

If so, steps 58, 55 and 56 are performed as mentioned in description of figure 5. According to a variant, step 51 is reiterated after step 55.

If no, a preprocessing step 510 (similar to preprocessing 54) applied to remaining bins (bins that do not belong to subset defined in step 57) is performed. As a variant, preprocessing 510 is only applied to a new subset among the remaining bins (this preprocessing then can be iterative). Then, step 55 is performed.

According to a variant, as the channel may be very static, if it observed that results of preprocessing 54 of neighbor bins of the subset defined in step 57 are similar (i.e. the difference is lower that a given threshold), then next time step 57 is executed, the subset definition is modified to reduce the number of bins to take into account.

**Figure 6** details preprocessing step 54. A brief explanation of the decoding method is first disclosed hereafter. As mentioned above, this processing step applies only on bins of subset.

We assume that the decoder 35 perfectly knows the channel matrix diag($\mathbf{H}_1$,..., $\mathbf{H}_N$), which is implemented in practice by using appropriate pilot symbols and appropriate tracking. The denomination STBC comes from the fact that each STB codeword is represented by a matrix **CS** and the encoding process is a simple matrix multiplication.

**CS** in equation (1) denotes the STB (Space Time Block) encoded signal. The encoding process is represented by complex matrix multiplications in the present case but from a more general point of view, it shall be represented by real matrices where the real and imaginary parts of **S** are encoded separately. Indeed, the STBC scheme disclosed in Alamouti document ("Space-Time block coding: A simple transmitter diversity technique for wireless communications") can only be represented with such real notations. Such more general writing turns (1) into:

$$\underbrace{\begin{pmatrix} \mathbf{R}^R \\ \mathbf{R}^I \end{pmatrix}}_{\mathbf{R'}} = \underbrace{\begin{pmatrix} \mathbf{H}^R & -\mathbf{H}^I \\ \mathbf{H}^I & \mathbf{H}^R \end{pmatrix}\mathbf{C'}}_{\mathbf{G'}}\underbrace{\begin{pmatrix} \mathbf{S}^R \\ \mathbf{S}^I \end{pmatrix}}_{\mathbf{S'}} + \underbrace{\begin{pmatrix} \mathbf{v}^R \\ \mathbf{v}^I \end{pmatrix}}_{\mathbf{v'}} \qquad (2)$$

where **C'** is the STBC encoding matrix in real notations, $(.)^R$ and $(.)^I$ denote respectively the real and imaginary parts of a complex number or matrix.

In real notations, the dimension of the input signal **S'**, which is the problem dimension, is $K=2Q$. When **S** is modulated using a QAM modulation, each of the components of **S'** are PAM modulated, i.e. they take bounded discrete values. Therefore **G'** is in this case a basis of the $K=2Q$ dimensions lattice representing the problem. However, lattice decoding algorithms more advantageously use a triangular matrix as a lattice basis, so that the starting point of the search algorithm is not (2) but it is given by equation (3):

$$\mathbf{R}_p = \mathbf{U}^{-t}\mathbf{G'}^{t}\mathbf{R'} = \mathbf{US'} + \mathbf{\eta}$$

**U** is a upper triangular $K$x$K$ matrix. $\mathbf{R}_p$ is the new $K$x1 observation vector and $\eta$ is the $K$x1 noise vector with

auto correlation $\mathbf{R}_\eta = \dfrac{\sigma^2}{2}\mathbf{I}_K$ . the new lattice basis that is used by lattice decoding algorithms.

According to a variant, the time/frequency dimension $N$ is replaced by a time dimension if a single carrier modulation is used.

From the new observation $\mathbf{R}_p$ and knowledge of the channel, the STBC decoder finds the best estimate of the transmitted signal **S**. The lattice decoders use a lattice representation of the problem, where each lattice point is a potential transmitted signal. From this lattice representation, they enumerate a reduced number of candidate signals with respect to what would do a basic ML decoder. For instance, with $Q$ equals to 8 and using 16QAM constellation, a basic ML decoder will enumerate $16^8$ candidates to decode a STBC codeword and the lattice decoders will only enumerate very few of them. According to ML decoding, The ML signal (or SML) corresponds to the minimum metric on all possible signals, i.e.

$$\mathbf{S}_{ML} = \underset{all\ possible\ \mathbf{S}}{\arg\min}\left(\left\|\mathbf{R} - \mathbf{GS}\right\|^2\right)$$

As all possible signals are too many, the search space is reduced to the space between two spheres 71 and 72 of radius *dmin* and *dmax.*

For any type of lattice decoder, the decoding algorithm can be split into two main phases:

- the preprocessing phase 54 that enables the determination of a base of point lattice on a subset of time intervals and/or subcarriers (frequencies).
- the search phase corresponding to step 55.

The preprocessing phase 54 begins with a computation 540 of Gram Matrix. Gram matrix corresponds to a multiplication of an equivalent channel matrix **new_G'** by its transpose **new_G'**$^t$.

Then, during a step 541, the CPU 41 executes a triangular decomposition. A Cholesky decomposition of the associated Gram matrix is done by the CPU 41. This operation provides a triangular matrix **U** corresponding to the Gram matrix. More precisely, thanks to the structure of **new_G',** a triangular matrix **U** is defined as follows (where **X**$^t$ denotes the transpose of a matrix **X**):

$$\mathbf{new\_G'}^{t}\,\mathbf{new\_G'} = \mathbf{U}^{t}\mathbf{U}$$

Then, in a step 542, the received signal is projected on the matrix computed on step 541. This projection first multiplies the received signal **R**' by **new_G'**$^t$ and then by the inverse of **U**$^t$.

As the variant, the step 541 is replaced by a QR decomposition of a new equivalent channel matrix (**new_G'**), **new_G'** being equal to **QU** where **Q** is an orthogonal matrix and **U** an upper triangular matrix. In this case, step 542 comprises a multiplication by **Q**$^t$.

**Figure 12** represents details Gram Matrix computation 540. The step 540 begins with a step 5400 of computation of an equivalent channel matrix **G**' equal to the product **HC**.

Step 540 consists in permuting the columns of the real matrix **G**' of equation (2) according to a particular criterion based on the components of the Gram matrix **G'**$^t$**G'.**

$$\underbrace{\begin{pmatrix} \mathbf{R}^{R} \\ \mathbf{R}^{I} \end{pmatrix}}_{\mathbf{R'}} = \underbrace{\begin{pmatrix} \mathbf{H}^{R} & -\mathbf{H}^{I} \\ \mathbf{H}^{I} & \mathbf{H}^{R} \end{pmatrix}\mathbf{C'}}_{\mathbf{G'}}\underbrace{\begin{pmatrix} \mathbf{S}^{R} \\ \mathbf{S}^{I} \end{pmatrix}}_{\mathbf{S'}} + \underbrace{\begin{pmatrix} \mathbf{v}^{R} \\ \mathbf{v}^{I} \end{pmatrix}}_{\mathbf{v'}} \qquad (2)$$

According to step 540, the lattice basis is permuted so that successive dimensions that are addressed in the search phase are as collinear as possible. The component $(\mathbf{G'}^{t}\mathbf{G'})_{ij}$ contains the scalar product between $i^{th}$ and $j^{th}$ basis vectors that are respectively $i^{th}$ and $j^{th}$ column vectors of **G'**, so that the larger $abs((\mathbf{G'}^{t}\mathbf{G'})_{ij})$, the more collinear the $i^{th}$ and $j^{th}$ vectors.

According to a variant, complex notations are used (instead of real notation), the vectorial space on the field of real numbers is replaced by the vectorial space on the field of complex numbers and the scalar product (and associated norm) is changed accordingly.

Then, during a step 5401, a matrix **M** is computed, **M** being equal to the product **G'**$^t$**G'** plus $\varepsilon$, where $\varepsilon$ is smaller than the smallest absolute value of **M**. The use of $\varepsilon$ allows that the step 540 also produces a permutation of $(1,..,K)$ even when **M** is diagonal. The product **G'**$^t$**G'** corresponds to computation of non normalized scalar products of vectors of G'.

Then, during a step 5402, the diagonal of **M** is set to 0 (**M**$(i,i)$ equals 0 for every value of $i$ from 1 to $K$). This avoids producing the identity permutation or a permutation only based on the lattice basis vector norms, which performs worse than the present criterion.

During step 5402, the first element of a permutation vector **P** is set to 1 (**P**$(1,1)$= 1) and a variable $i\_in$ is set to **1**. This corresponds to a choice of first column of **G**'. As a variant, the first dimension dealt with is the one corresponding to the smallest or largest diagonal value of **G'**$^t$**G**' (this enables processing of the dimension with largest energy first, in the lattice decoding step).

After choice of a first dimension, the vectors of **M** are sorted according to a decreasing colinearity criterion, vectors being compared 2 by 2 (that enables a dimension permutation).

Then, during a step 5403, a counter $i$ is set to 1.

Then, during a step 5404, the element **M**$(i\_in,$ **P**$(1,1:i))$ is set to 0. $(1:i)$ denotes the vector $[1,2,...,i]$ so that **P**$(1,1:i)$ denotes the first $i$ components of the row 1 of **P**. **M**$(i\_in,\mathbf{P}(1,1:i))$ denotes the elements of row $i\_in$ of **M** having column indexes **P**$(1,1:i)$. This initialization 5404 of the $i\_in$ row of **M** is made to avoid producing twice the same index in the permutation vector (and hence not producing a permutation).

Then, during a step 5405, a counter $k$ is set to 1 and a variable $max$ is set to 0.

Then, during a test 5406, the CPU 41 checks if the absolute value of **M**$(i\_in,k)$ is superior or equal to $max.$

If so, during a step 5407, max is set to the absolute value of **M**$(i\_in,k)$ and an index $i\_out$ is set to $k.$

If the result of test 5406 or after 5407, the counter $k$ is incremented $(k=k+1).$

In test 5406 and step 5407, the index $i\_out$ corresponding to the basis vector is searched. The index $i\_out$ is the most collinear (i.e. largest absolute value of scalar product) with respect to the current basis vector $i\_in.$

Then, during a test 5409, the CPU 41 checks if the counter $k$ is equal to $K+1$.

If no, the test 5406 is reiterated.

If yes, during a step 5410, the value of P(1,*i*+1) is set to *i_out*. Adjacent dimensions in the permutation now have highest absolute value of scalar product. During, this step *i_in* is also set to *i_out*.

Then, during step 5411, the counter *i* is incremented (*i*=*i*+1).

Then, during a test 5412, the CPU 41 checks if *i* equals *K.*

If no, step 5404 is reiterated.

If yes, during a step 5413, a new matrix **new_G'** is obtained from **G'** by permuting the columns of **G'** according to **P (new_G = G'(:,P**(1,1:K))). The new Gram matrix **new_Gram** is equal to the product **new_G'ᵗ*new_G' new_ Gram=GᵗᵗG'(P**(1,1:K),**P**(1,1:K)) and is obtained from **GᵗᵗG'** by permuting the columns and lines of **GᵗᵗG'**. This new matrices **new_Gram** and **new_G'** are the ones that will serve for the lattice decoding preprocessing phase (QR or Cholesky decomposition...).

In a variant where step 541 is replaced by a QR decomposition of **new_G',** producing a **new_Gram** matrix is not necessary (during step 5413).

According to a variant, during step 5401 **M** is equal to the product **GᵗᵗG** and, it is checked whether **M** is diagonal or not. If so, steps 5402 to 5412 are replaced by a permutation that is only based on the diagonal values of **M** and more especially that comprises an ordering of its elements according to decreasing (or increasing) values of diagonal values.

According to a variant, step 5401 can be replaced by step 13 disclosed in **figure 13**. According to this variant the scalar product between vectors of **G'** is normalized.

Step 14 begins by a step 130 of set of a counter *i* to 0.

Then, during a step 131, the counter *i* is incremented (*i*=*i*+1).

Then, during a step 132, a counter *j* is set to 0.

Then, during a step 133, the counter *j* is incremented (*j*=*j*+1).

Then, during a step 134, the element **M**(i,j) is set to **GᵗᵗG'**(i,j)/sqrt(**GᵗᵗG'**(i,i)***GᵗᵗG'G'**(j,j)), this scalar product being normalized.

Then, during a test 135, the CPU 41 checks if *j* equals *K.* If no, step 133 is reiterated.

If yes, during a test 136, the CPU 41 checks if *i* equals *K.* If no, step 131 is reiterated. If yes, during a step 137, **M** is set to the sum **M** +ε.

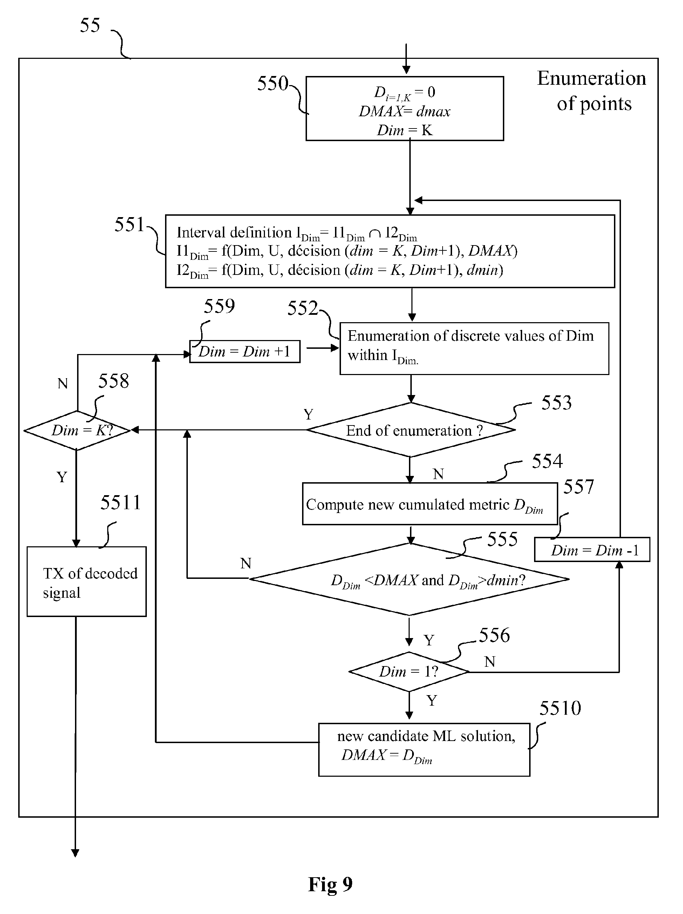

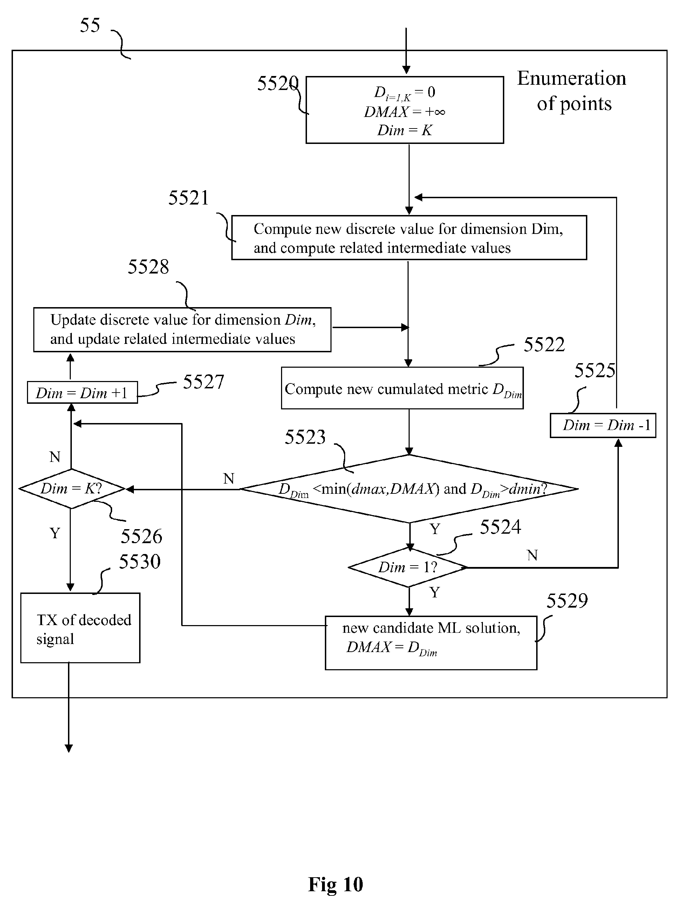

**Figure 9 and 10** detail decoding step 55, which comprises an enumeration of candidate lattice points that takes into account a minimum distance *dmin.*

ML points are searched among lattice points (using the basis **U**) that are in a space between spheres 71 and 72 of radius respectively *dmin* and *dmax.*

Depending on the type of lattice decoder, this search phase is implemented in different ways. Figures 9 and 10 detail two different embodiments. Other alternative search algorithms can be implemented according to the invention, these algorithms being based on algorithms such as so called tree search, branch and bound and wherein the ML points are searched in a space outside a sphere of a minimum radius *dmin.*

Embodiment of **figure 9** is based upon a sphere decoding (as the algorithm of Viterbo/Boutros) with a restriction of the selection lattice points that must not be too close to the received signal point (the distance between the selected points and the received signal point is greater than *dmin*). Provided that the sphere radius is large enough, the ML point is in the largest sphere. This approach allows to define bounds for each component (or dimension) of the candidate signals **S**, within which discrete components of the signal are enumerated. That can be summarized by the equation:

$$d\min{}^2 < \left(\mathbf{U}^{-1}\mathbf{R}_p - \mathbf{S}\right)^t \mathbf{U}^t\mathbf{U}\left(\mathbf{U}^{-1}\mathbf{R}_p - \mathbf{S}\right) < d\max{}^2$$

The inverse of **U** is straightforward. Using that **U** is upper triangular, we obtain recursive bounds for each component of a candidate **S**.

The components of **S** further satisfy the modulation constellation boundaries constraints as **S** components are a constellation point. For instance, if a 16QAM modulation is used, the components of **S** satisfy -3<Si<3.

The step 55 begins with an initialization step 550 where a cumulated metric *DDim* associated to each dimension is set to 0, a maximum distance *DMAX* is set to infinity and a current dimension index *Dim* is set to *K* (lattice dimension).

Then, during a step 551, three intervals are defined:

- *I1dim*=[*V1,V2*] defines boundaries for the components of dimension *Dim* of a candidate signal as follows:

$$V1 = \frac{1}{\mathbf{U}_{i,i}}\left(-\sqrt{\left[r^2 - \sum_{j=i+1}^{K}\left(\mathbf{U}_{j,j:K}\left(\mathbf{O}-\mathbf{S}\right)_{j:K,1}\right)^2\right]^+} + \left(\mathbf{U}_{i,i}\mathbf{O}_{i,1} + \left(\mathbf{U}_{i,i+1:K}\left(\mathbf{O}-\mathbf{S}\right)_{i+1:K,1}\right)\right)\right)$$

$$V2 = \frac{1}{\mathbf{U}_{i,i}}\left(\sqrt{\left[r^2 - \sum_{j=i+1}^{K}\left(\mathbf{U}_{j,j:K}\left(\mathbf{O}-\mathbf{S}\right)_{j:K,1}\right)^2\right]^+} + \left(\mathbf{U}_{i,i}\mathbf{O}_{i,1} + \left(\mathbf{U}_{i,i+1:K}\left(\mathbf{O}-\mathbf{S}\right)_{i+1:K,1}\right)\right)\right)$$

for $i=K-1$ and with $r=DMAX$, $\mathbf{O}=\mathbf{U}^{-1}\mathbf{R}_p$ and $i=Dim$

- $I2dim =]-\infty, V'1]$ U $[V'2, +\infty[$ defines boundaries for the components of dimension $Dim$ of a candidate signal as follows:

$$V'1 = \frac{1}{\mathbf{U}_{i,i}}\left(-\sqrt{\left[r^2 - \sum_{j=i+1}^{K}\left(\mathbf{U}_{j,j:K}\left(\mathbf{O}-\mathbf{S}\right)_{j:K,1}\right)^2\right]^+} + \left(\mathbf{U}_{i,i}\mathbf{O}_{i,1} + \left(\mathbf{U}_{i,i+1:K}\left(\mathbf{O}-\mathbf{S}\right)_{i+1:K,1}\right)\right)\right)$$

$$V'2 = \frac{1}{\mathbf{U}_{i,i}}\left(\sqrt{\left[r^2 - \sum_{j=i+1}^{K}\left(\mathbf{U}_{j,j:K}\left(\mathbf{O}-\mathbf{S}\right)_{j:K,1}\right)^2\right]^+} + \left(\mathbf{U}_{i,i}\mathbf{O}_{i,1} + \left(\mathbf{U}_{i,i+1:K}\left(\mathbf{O}-\mathbf{S}\right)_{i+1:K,1}\right)\right)\right)$$

for $i=K-1$ and with $r=dmin$, $\mathbf{O}=\mathbf{U}^{-1}\mathbf{R}_p$ and $i=Dim$

- $IDim$ is equal to the intersection of $I1dim$ and $I2dim$ and is also restricted to the boundaries of the modulation constellation.

Then, during a step 552, the CPU 41 begins to enumerate or continues to enumerate the discrete values of a component of dimension $Dim$ of a candidate.

Then, during a test 553, the CPU 41 checks if the enumeration is finished (i.e. if all possible discrete values of $Idim$ have been tested).

If the negative, during a step 554, the CPU 41 computes a new cumulated metric $DDim$ associated to $Dim$ and current related discrete value.

Then, during a test 555, the CPU 41 checks if the cumulated metric $DDim$ is smaller than $DMAX$ and larger than $dmin$.

If so, during a test 556, the CPU 41 checks if the current dimension $Dim$ is equal to 1.

If no, the dimension $Dmin$ is decreased by 1 in a step 557 and the step 551 is reiterated.

If during the test 553, the end of enumeration is reached, or if the result of test 555 is negative, then, during a test 558, the CPU 41 checks if $Dim$ equals K.

If $Dim$ is different of K, then during a step 559, $Dim$ is increased by 1 and step 552 is reiterated.

If $Dim$ equals K, then, during a step 5511, the current ML candidate is chosen and sent as decoded signal and demapped according to digital modulation (symbol to bits conversion) to an application.

If the result of test 556 is positive ($Dim$=1), then during a step 5510, a new candidate ML solution replaces the current one and $DMAX$ is set to $DDim$. After step 5510, step 559 is performed.

Embodiment of **figure 10** is based upon a decoding based on projections (as the Schnorr-Euchner algorithm) with a restriction of the selection lattice points that must not be too close to the received signal point (the distance between the selected points and the received signal point is greater than $dmin$). The search comprises successive orthogonal projections of the received signal on lattice subspaces and enumerating the lattice points between two spheres 71 and 72 around the projected point.

The components of **S** further satisfy the modulation constellation boundaries constraints as **S** components are a constellation point. For instance, if a 16QAM modulation is used, the components of **S** satisfy -3<Si<3.

According to variant of figure 10, the step 55 begins with an initialization step 5520 where a cumulated metric *DDim* associated to each dimension is set to 0, a maximum distance *DMAX* is set to infinity and a current dimension index *Dim* is set to *K* (lattice dimension).

Then, during a step 5521, the CPU 41 computes a new discrete value of component of dimension *Dim* of a candidate signal and intermediate values related to *Dim* and to this discrete value (incrementing step, partial metric).

Then, during a step 5522, the CPU 41 computes a new cumulated metric *DDim* associated to *Dim* and current related discrete value.

Then, during a test 5523, the CPU 41 checks if the cumulated metric *DDim* is smaller than the minimum value among *dmax* and *DMAX* (*DDim<min(dmax,DMAX)*) and larger than *dmin* (*DDim>dmin*).

If so, during a test 5524, the CPU 41 checks if the current dimension *Dim* is equal to 1.

If no, the dimension *Dim* is decreased by 1 in a step 5525 and the step 5521 is reiterated.

If yes, during a step 5529, a new candidate ML solution replaces the current one and *DMAX* is set to *DDim.*

If the result of test 5523 is negative, or then, during a test 5526, the CPU 41 checks if *Dim* equals *K*.

If *Dim* is different of *K* or after step 5529, during a step 5527, *Dim* is increased by 1.

Then, during a step 5528, the CPU 41 updates a new discrete value of component of dimension *Dim* of a candidate signal (i.e. add the incrementing step to the previous discrete value of *Dim*) and intermediate values related to *Dim* and to this discrete value. Then, step 5522 is reiterated.

If *Dim* equals *K* during the test 5526, then, during a step 5530, the current ML candidate is chosen and sent as decoded signal and demapped according to digital modulation (symbol to bits conversion) to an application.

As a variant step 55 does not take into account a minimum distance *dmin*. Such a variant can derive from decoding step presented in figures 9 and 10 and is, for example, based on the enumeration of candidates as in document "A universal lattice code decoder for fading channel," written by E. Viterbo and J. Boutros (and published in IEEE Trans. Inform. Theory, vol. 45, pp. 1639-1642, July 1999) or in document "Lattice basis reduction: Improved practical algorithms and solving subset sum problems," written by C.P. Schnorr and M. Euchner (and published in Math. ProGraming, vol. 66, pp. 181-191, 1994). Those documents disclose ML recursive decoding algorithms that are based on a lattice and enable enumeration of points and selection of points after reception of a signal representative of data. The selection of points is done in a sphere the diameter of which depends on the signal/noise ratio. After computation of some metrics, a ML point is selected either by enumerating candidates points in a sphere (Boutros) or by successive projections on sublattices (Schnorr/Euchner).

**Figure 11** represents a multiuser detection according to a specific embodiment of the invention. This detection or decoding is applied to a wireless network comprising a receiver and a set of several transmitters that can be identified through a multiple access scheme (e.g. CDMA (or Code Division Multiple Access), flash OFDM, ...). In this context, several users are sharing the same propagation resource to transmit data to the receiver.

In the case of multiuser detection, similarly to the MIMO decoding as disclosed previously, the decoding problem comprises a detection of a transmitted multidimensional discrete input vector based on a multidimensional continuous observation that is made of a linearly distorted version of the transmitted vector further corrupted by additive noise.

For multiuser detection according to the invention, the multidimensional input vector is made of the real and imaginary components of the collection of symbols transmitted by *Q* users on a given time and/or frequency region depending on the multiple access scheme. For instance, in the case of Code Division Multiple Access (CDMA), the region corresponds to the time duration of the spreading sequences. The multidimensional continuous observation is made of the collection of matched responses to the set of used multiple access signatures. The linear distortion of the transmitted signals is the matrix made of the collection of equivalent channel matrices between the *Q* transmitters and the receiver taking into account the multiple access scheme. For instance, in the case of CDMA, this linear distortion is made of the combination of the channel matrices with the correlation matrix of the spreading codes subset. The additive noise is the thermal additive white Gaussian noise at the receiver side and its amplitude follows a chi square law.

Figure 11 represents a multi-user detection according to a specific embodiment of the invention. This detection is implemented in a receiver that receives data from *Q* transmitters using e.g. a CDMA.

The decoding begins with a initialization step 110, wherein different parameters of the method are set to their initial value(s).

Then, during a step 111, the receiver waits for and receives a signal from filters matched to the used CDMA sequences.

Then, the receiver makes an estimation 112 of the channels between the *Q* transmitters and the receiver. This estimation is based upon the pilot sequences used specifically by each transmitter.

Then, in a step 113, the receiver computes σ using, for example, pilot sequences, and determines *dmin* as explained above (*Q* meaning here the number of transmitters being used to define *dmin* in the same way as *Q* meaning the number of symbol per space/time codeword in the embodiment of figure 5) and possibly *dmax* in a similar way. Advantageously, step 113 is executed after each channel estimation 112. According to a variant of the invention, step 113 is not done at each reception of signal corresponding to one transmitted block.

According to a variant, the decoding method does not take into account any minimum distance *dmin* and step 113 does not determine *dmin.*

During a step 117, a subset of time/frequency bins is determined. The subset comprises bins that correspond to one out of two time dimensions and one out of two frequency dimension. Step 117 is similar to step 57 and won't be furthered disclosed.

Then, the receiver is executing a preprocessing step 114 similar to step 54 of figure 5, the equivalent channel matrix **G**' being replaced by the matrix made of the collection of equivalent channel matrices between the *Q* transmitters and the receiver taking into account the multiple access scheme.

Then, during step 118, for each bin that does not belong to the subset, an interpolation is performed using the result step 114 for bins of subset, surrounding the considered bins. Step 118 is similar to step 58 and won't be furthered disclosed.

Then, receiver is enumerating lattice points and selects decoded point in a step 115 similarly to step 55 of figure 5, the candidate transmitted space/time encoded signal being replaced by the collection of the transmitted signals by the *Q* transmitters.

Then, during a step 116, the components of the decoded point are inversely permutated according to the permutation produced by step 540. After step 116, step 111 is reiterated.

According to variant of multi-user detection, part of the transmitters or all of them and the receiver use single antennas, or MIMO. According to other variants, the transmitters and the receiver are using single carrier or multiple carrier modulation.

According to a variant (not illustrated), a test is performed to check whether interpolation or preprocessing is appropriate. According to this variant, a test similar to test 59 is performed after step 114. If the result of this test is positive, then the step 118 is performed. Else, a preprocessing step similar to step 114 and applied to bin that are outside the subset is performed, this step being followed by step 115.

Of course, the invention is not limited to the embodiments described above.

The invention is compatible with any type of wireless link (point to point links, wireless LANs, mobile networks, digital broadcasting, satellite communication, ...). The disclosed receiver in figure 3 comprises then elements adapted to a specific application (such as front end, demodulator, MAC layer interface, and all other usual communication layer elements). The invention is especially well adapted to the reception of Digital Video Broadcasting (or DVB (e.g. DVB-T (terrestrial), DVB-S (satellite), DVB-H (handheld)..). In this case, the discrete multidimensional coded signal comprises data representative of a digital video broadcast signal.

The invention is advantageously used in high spectral efficiency wireless transmission (MIMO system and/or nQAM modulation), and, in particular, high rate transmission. Indeed, the invention can be used for other transmission (eg. single antenna for multi-user detection, nQPSK modulation, ...).

The invention is not limited to MIMO decoding or multi-user detection and can be applied to combination of MIMO decoding and multi-user detection and more generally to any system wherein noise amplitude distribution is following a chi square law and more generally laws that are not centred on 0 (these laws are generally associated to a multidimensional distribution of noise in a multidimensional signal decoding).

The invention comprises the determination of a minimum distance according to a noise level associated to the multidimensional received signal. When applied to a MIMO decoding, the dimensions of the received signals corresponds to $K$ (in real notation for nQAM or nPSK modulation) or Q(in complex notation for nQAM or nPSK modulation or polar notation for nPSK modulation). When applied to a multi-user detection, the dimensions of the received signal corresponds to the number of users ($Q$ in complex notation or polar notation (if the users using nPSK modulation)) or $K=2Q$ in real notation.

According to MIMO decoding according to the invention, the receiver decodes a signal that has been space time encoded and transmitted with at least two antennas. The space time encoding can be based on a space time block code. According to a variant, the space time encoding is a simple spatial multiplexing; then, the code matrix **C** is the identity matrix.

**Claims**

1. Method of decoding of a multidimensional received signal corresponding to a discrete multidimensional coded signal transmitted through a channel, so-called transmitted signal, **characterized in that** it comprises the following steps:

   - preprocessing (54, 114) applied to a subset of bins within a set of time/frequency bins to build channel equivalent (**G**') matrices restricted to the subset;
   - interpolation (58, 118) for remaining time/frequency bins with respect to the channel equivalent matrices restricted to the subset to build channel equivalent matrices associated with the remaining time/frequency bins ; and

- decoding (55) of an observation with a lattice decoding by using the channel equivalent matrices associated to the set of time/frequency bins.

2. Method according to claim, **characterized in that** preprocessing step comprises the building of matrices (**Q**, **R**, **G'$^t$G'**, **U**, **U$^{-1}$**) derived from channel equivalent matrices restricted to the subset; **in that** the interpolation step comprises the building of matrices derived from channel equivalent matrices associated with the remaining time/frequency bins; and **in that** decoding step is using the channel equivalent matrices and derived matrices associated to the set of time/ frequency bins.

3. Method according to any of claims 1 and 2, **characterized in that** the interpolation step is comprising a linear interpolation.

4. Method according to any of claims 1 to 3, **characterized in that** the interpolation step applied to a given time/ frequency bin is comprising an interpolation based on adjacent bins belonging to the subset and located in the neighborhood of the given time/frequency bin.

5. Method according to any of claims 1 to 4, **characterized in that** the interpolation step applied to a given time/ frequency bin is based on bins belonging to the subset and associated with the same frequency as the frequency of the given time/frequency bin.

6. Method according to any of claims 1 to 5, **characterized in that** time/frequency of the subset are regularly located in the subset.

7. Method according to any of claims 1 to 6, **characterized in that** it comprises a step of check (59) of variation of values depending on at least a part of the result of the preprocessing step, and if a variation along time dimension and/or frequency dimension is small according to a variation criterion, then a preprocessing step (510) is also applied to at least a part of remaining time/frequency bin.

8. Method according to any claims 1 to 7, **characterized in that** the discrete multidimensional coded signal comprises data representative of a digital video broadcast signal.

9. Device (10, 11, 12, 3) comprising a decoder (35) of a multidimensional received signal corresponding to a discrete multidimensional coded signal transmitted through a channel, so-called transmitted signal, **characterized in that** it comprises the following means:

- means of preprocessing applied to a subset of bins within a set of time/frequency bins to build channel equivalent (G') matrices restricted to the subset;
- means of interpolation for remaining time/frequency bins with respect to the channel equivalent matrices restricted to the subset to build channel equivalent matrices associated with the remaining time/frequency bins ; and
- means of decoding of an observation with a lattice decoding by using the channel equivalent matrices associated to the set of time/frequency bins, that comprise channel equivalent matrices restricted to the subset and channel equivalent matrices associated with the remaining time/frequency bins.

1

11

10

12

**Fig 1**

2

20 · 21 · Mod · 22 · 23 · Encoder · 24 · 25 · t/F mapping · 261 · 271 · OFDM

26Ntx · 27Ntx · 281

27Ntx · 281

OFDM

28Ntx

**Fig 2**

3

301    311    321    33    35

OFDM

31Nrx

30Nrx

OFDM

t/F
demapping

34

Decoder

36

32Nrx

**Fig 3**

35

41

CPU

42

ROM

Prog

420

43

44

RAM

Prog — 430

Input Data — 431

Decoded Data — 432

$\sigma$ — 433

45

RX

*dmin* — 434

*dmax* — 435

$D_{Dim}$ — 436

*DMAX* — 437

*K* — 438

f(*po*) — 439

**G', H, C** — 4310

**M**, $\varepsilon$ — 4311

46

I/F appli

*i, k* — 4312

*i_in, i_out* — 4313

**new_G'** — 4314

**new_Gram** — 4315

subset — 4316

**U, U**$^{-t}$ — 4317

**Fig 4**

50

Init

51 — Signal RX

52 — Channel estimation

53 — $\sigma$, $d_{min}$, $d_{max}$

57 — Lattice Base on a Space/time subset

54 — Preprocessing

58 — Interpolation

55 — Enumeration of points

Selection of decoded point

56 — Inverse permutation
of detected point

**Fig 5**

54

Preprocessing

540

Gram Matrix computation

541

Cholesky decomposition

542

Projection

**Fig 6**

**Fig 7**

**Fig 8**

**Fig 9**

**Fig 10**

110

Init

111 Signal RX

112 Channels estimation

113 $\sigma, d_{min}, d_{max}$

117 Lattice Base on a Space/time subset

114 Preprocessing

118 Interpolation

115 Enumeration of points
Selection of detected point

116 Inverse permutation
of detected point

**Fig 11**

540

Gram Matrix computation

$$\mathbf{G'} = \mathbf{HC}$$
5400

$$\mathbf{M} = \mathbf{G'^tG'} + \varepsilon$$
5401

Init $\mathbf{M}(i,i) = 0$; $\mathbf{P}(1,1)=1$; $i\_in=1$
5402

$i = 1$
5403

$\mathbf{M}(i\_in,\mathbf{P}(1,1{:}i))=0$;
5404

$k = 1$
5405

N

abs($\mathbf{M}(i\_in,k)$>$max$?
5406

Y

$max$=abs($\mathbf{M}(i\_in,k)$) ; $i\_out=k$
5407

$k = k+1$
5408

N

$k = K+1$?
5409

Y

$\mathbf{P}(1,i+1)=i\_out$; $i\_in=i\_out$
5410

$i = i+1$
5411

N

$i = K$?
5412

Y

new_$\mathbf{G'}$= $\mathbf{G'}(:,\mathbf{P}(1,1{:}K))$;
new_$\mathbf{Gram}$=$\mathbf{G'^tG'}(\mathbf{P}(1,1{:}K),\mathbf{P}(1,1{:}K))$;
5413

**Fig 12**

13

$i = 0$ — 130

$i = i+1$ — 131

$j = 0$ — 132

$j = j+1$ — 133

$\mathbf{M}(i,j) = \mathbf{G'^t G'}(i,j) / \mathrm{sqrt}(\mathbf{G'^t G'}(i,i) * \mathbf{G'^t G'}(j,j))$ — 134

N ← $j = K?$ — 135

Y

N ← $i = K?$ — 136

Y

$\mathbf{M} = \mathbf{M} + \varepsilon$ — 137

**Fig 13**

50

Init

51 — Signal RX

52 — Channel estimation

53 — $\sigma, d_{min}, d_{max}$

57 — Lattice Base on a Space/time subset

54 — Preprocessing

59 — Small variations?

N

510 — Preprocessing

Y

58 — Interpolation

55 — Enumeration of points
Selection of decoded point

56 — Inverse permutation
of detected point

**Fig 14**

**EP 1 912 369 A1**

**European Patent Office**

## EUROPEAN SEARCH REPORT

Application Number

EP 06 30 1041

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/072254 A1 (MA JIANGLEI [CA] ET AL) 17 April 2003 (2003-04-17) * paragraph [0099] * | 1-9 | INV. H04L1/06 H04L25/02 |
| X | US 2003/016645 A1 (SIALA MOHAMED [TN] ET AL) 23 January 2003 (2003-01-23) * paragraph [0079] * | 1-9 | |
| X | EP 1 703 686 A (SONY DEUTSCHLAND GMBH [DE]) 20 September 2006 (2006-09-20) * paragraphs [0028], [0029], [0031], [0033], [0035], [0036] * * claim 1 * | 1-9 | |
| A | JINGMING WANG ET AL: "Performance of linear interpolation-based MIMO detection for MIMO-OFDM systems" WIRELESS COMMUNICATIONS AND NETWORKING CONFERENCE, 2004. WCNC. 2004 IEEE ATLANTA, GA, USA 21-25 MARCH 2004, PISCATAWAY, NJ, USA,IEEE, vol. 2, 21 March 2004 (2004-03-21), pages 981-986, XP010708264 ISBN: 0-7803-8344-3 * page 981 - page 982 * | 1-9 | **TECHNICAL FIELDS SEARCHED (IPC)** H04L H04B |
| A | BORGMANN M ET AL: "Interpolation-based efficient matrix inversion for MIMO-OFDM receivers" SIGNALS, SYSTEMS AND COMPUTERS, 2004. CONFERENCE RECORD OF THE THIRTY-EIGHTH ASILOMAR CONFERENCE ON PACIFIC GROVE, CA, USA NOV. 7-10, 2004, PISCATAWAY, NJ, USA,IEEE, 7 November 2004 (2004-11-07), pages 1941-1947, XP010781386 ISBN: 0-7803-8622-1 * page 1941 - page 1944 * | 1-9 | |

-/--

The present search report has been drawn up for all claims

| Place of search | Date of completion of the search | Examiner |
|---|---|---|
| Munich | 25 May 2007 | Belloni, Paolo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

30

| | European Patent Office | EUROPEAN SEARCH REPORT | Application Number EP 06 30 1041 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2006/050627 A (ETH ZURICH [CH]; BURG ANDREAS [CH]; BOELCSKEI HELMUT [CH]; BORGMANN MO) 18 May 2006 (2006-05-18) * the whole document * | 1-9 | |
| | ----- | | |
| | | | TECHNICAL FIELDS SEARCHED (IPC) |

The present search report has been drawn up for all claims

| Place of search | Date of completion of the search | Examiner |
|---|---|---|
| Munich | 25 May 2007 | Belloni, Paolo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 30 1041

This annex lists the patent family members relating to the patent documents cited in the above-mentioned European search report.
The members are as contained in the European Patent Office EDP file on
The European Patent Office is in no way liable for these particulars which are merely given for the purpose of information.

25-05-2007

| Patent document cited in search report | | Publication date | Patent family member(s) | | Publication date |
|---|---|---|---|---|---|
| US 2003072254 | A1 | 17-04-2003 | WO 03034644 A1<br>CN 1605172 A<br>EP 1442549 A1<br>US 2007053282 A1 | | 24-04-2003<br>06-04-2005<br>04-08-2004<br>08-03-2007 |
| US 2003016645 | A1 | 23-01-2003 | CN 1475066 A<br>EP 1325600 A1<br>FR 2814011 A1<br>WO 0223841 A1<br>JP 2004509520 T | | 11-02-2004<br>09-07-2003<br>15-03-2002<br>21-03-2002<br>25-03-2004 |
| EP 1703686 | A | 20-09-2006 | NONE | | |
| WO 2006050627 | A | 18-05-2006 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BURG.** VLSI implementation of MIMO detection using the sphere decoding algorithm. *Solid-State Circuits, IEEE Journal,* July 2005, vol. 40 (7), 1566-1577
- **DAMEN.** On maximum-likelihood detection and the search for the closest lattice point. *Information Theory, IEEE Transactions,* October 2003, vol. 49 (10), 238-2402
- **J.-C. BELFIORE ; G. REKAYA ; E. VITERBO.** The Golden Code: A 2 x 2 Full-Rate Space-Time Code with Non-Vanishing Determinants. *IEEE Transactions on Information Theory,* April 2005, vol. 51 (4), 1432-1436
- **V.TAROKH ; H. JAFARKHANI ; R. A. CALDER-BANK.** Space-Time block codes from orthogonal designs. *IEEE Transactions on Information Theory,* July 1999, vol. 45, 1456-1467
- **H. BÖLCSKEI ; A. J. PAULRAJ.** Space-frequency coded broadband OFDM systems. *Proc. Wireless Commun. Networking Conf,* 23 September 2000, 1-6
- **S. ALAMOUTI.** Space-Time block coding: A simple transmitter diversity technique for wireless communications. *IEEE Journal On Select Areas In Communications,* October 1998, vol. 16, 1451-1458
- **E. VITERBO ; J. BOUTROS.** A universal lattice code decoder for fading channel. *IEEE Trans. Inform. Theory,* July 1999, vol. 45, 1639-1642
- **C.P. SCHNORR ; M. EUCHNER.** Lattice basis reduction: Improved practical algorithms and solving subset sum problems. *Math. ProGraming,* 1994, vol. 66, 181-191